# EUROPEAN PATENT APPLICATION

(11) **EP 4 451 185 A1**
(43) Date of publication of application: **23.10.2024**
(21) Application number: 23208969.8
(22) Date of filing: 10.11.2023
(51) Int. Cl.: G06Q 10/0631, G06F 3/12

(54) **INSPECTION LEVEL MANAGEMENT SYSTEM, INSPECTION LEVEL MANAGEMENT PROGRAM, AND INSPECTION LEVEL MANAGEMENT METHOD**

(30) Priority: 20.04.2023 JP 2023069620
(71) Applicant: FUJIFILM Business Innovation Corp., Minato-ku Tokyo (JP)
(72) Inventor: YAMAGUCHI, Megumi, Yokohama-shi (JP); NOGUCHI, Daisuke, Yokohama-shi (JP); NAKAYAMA, Hiroyoshi, Yokohama-shi (JP); KAWABE, Masatake, Yokohama-shi (JP)
(74) Representative: Kurig, Thomas

(57) **Abstract**

An inspection level management system includes a processor configured to: in a case where the number of remaining days until a delivery date of a printed matter by printing work for which an order is received is equal to or larger than a predetermined reference number of work days, set an inspection level for the printed matter to a predetermined first inspection level; in a case where the number of remaining days is smaller than the reference number of work days; set the inspection level for the printed matter by reducing the inspection level from the first inspection level to a second inspection level in which a work period is shorter than a work period of the first inspection level; and output the set second inspection level.

## Description

### BACKGROUND OF THE INVENTION

### (i) Field of the Invention

The present disclosure relates to an inspection level management system, an inspection level management program, and an inspection level management method.

### (ii) Description of Related Art

JP2022-97221A discloses an inspection management device including a control unit and a storage unit, in which the storage unit stores a first master in which an inspection pattern is registered for each destination, which is a combination of a regular customer and a delivery destination, and each product, and a second master in which a plurality of inspection items are registered is stored for each inspection pattern, and the control unit includes inspection record input means for inputting inspection record data including an inspection result of a predetermined inspection item for each produced product, order reception input means for inputting order reception information including the destination and the product, additional inspection determination means for acquiring the inspection pattern from the first master using the destination and the product of the order reception information as a key, acquiring the inspection item from the second master using the acquired inspection pattern as a key, comparing the acquired inspection item of the second master and the inspection item of the inspection record data for the product, and determining that an additional inspection is necessary in a case where there is an inspection item that does not exist in the inspection item of the inspection record data among the acquired inspection items of the second master.

### SUMMARY OF THE INVENTION

An object of the present disclosure is to achieve suppression of a delay in a delivery date of a printed matter for which an order is received.

According to a first aspect of the present disclosure, there is provided an inspection level management system including: a processor configured to: in a case where the number of remaining days until a delivery date of a printed matter by printing work for which an order is received is equal to or larger than a predetermined reference number of work days, set an inspection level for the printed matter to a predetermined first inspection level; in a case where the number of remaining days is smaller than the reference number of work days, set the inspection level for the printed matter by reducing the inspection level from the first inspection level to a second inspection level in which a work period is shorter than a work period of the first inspection level; and output the set second inspection level.

According to a second aspect of the present disclosure, there is provided the inspection level management system according to the first aspect, in which the processor may be configured to: adjust the reference number of work days according to a processing amount determined from the printing work for which the order is received.

According to a third aspect of the present disclosure, there is provided the inspection level management system according to the second aspect, in which the processing amount may include at least one of a printing man-hour according to the number of printed matters to be delivered or a post-processing man-hour until the printed matter is completed after inspection.

According to a fourth aspect of the present disclosure, there is provided the inspection level management system according to the third aspect, in which each of the printing man-hour and the post-processing man-hour may be represented by a plurality of units, a larger number of work days may be associated with each of the units as the processing amount is larger, and the processor may be configured to: in a case where the number of work days corresponding to the processing amount is different between the units of the printing work for which the order is received, set a largest number of work days as the reference number of work days.

According to a fifth aspect of the present disclosure, there is provided the inspection level management system according to the first aspect, in which the processor may be configured to: adjust a reduction degree of the inspection level according to a characteristic of the printed matter for which the order is received.

According to a sixth aspect of the present disclosure, there is provided the inspection level management system according to the fifth aspect, in which the characteristic may include at least one of an ink color used for drawing the printed matter or a paper color that is a color of paper of the printed matter.

According to a seventh aspect of the present disclosure, there is provided the inspection level management system according to the sixth aspect, in which the reduction degree of the inspection level may be associated with each of a plurality of colors that are usable as the ink color and each of a plurality of colors that are usable as the paper color, and the processor may be configured to: in a case where the reduction degree corresponding to the ink color of the printed matter and the reduction degree corresponding to the paper color are different from each other, reduce the inspection level by a smallest reduction degree.

According to an eighth aspect of the present disclosure, there is provided the inspection level management system according to the first aspect, in which the processor may be configured to: adjust a reduction degree of the inspection level stepwise according to the number of remaining days such that the reduction degree is larger as the number of remaining days is smaller.

According to a ninth aspect of the present disclosure, there is provided the inspection level management system according to the eighth aspect, in which the processor may be configured to: calculate a stepwise range of the number of days by dividing the reference number of work days by the number of reduction steps; calculate a unit reduction degree by dividing a preset maximum reduction degree by the number of reduction steps; in a case where the number of remaining days corresponds to a first step among a plurality of steps, reduce the first inspection level by the unit reduction degree; in a case where the number of remaining days corresponds to a center between the first step and a last step among the plurality of steps, reduce the first inspection level such that the reduction degree of the inspection level is increased one by one by the unit reduction degree as the step transitions by one from a side of the first step toward a side of the last step; and in a case where the number of remaining days corresponds to the last step among the plurality of steps, reduce the first inspection level by the maximum reduction degree.

According to a tenth aspect of the present disclosure, there is provided an inspection level management program causing a processor of an inspection level management system to execute a process including: processing of setting an inspection level for the printed matter to a predetermined first inspection level, in a case where the number of remaining days until a delivery date of a printed matter by printing work for which an order is received is equal to or larger than a predetermined reference number of work days; processing of setting the inspection level for the printed matter by reducing the inspection level from the first inspection level to a second inspection level in which a work period is shorter than a work period of the first inspection level, in a case where the number of remaining days is smaller than the reference number of work days; and processing of outputting the set second inspection level.

According to an eleventh aspect of the present disclosure, there is provided an inspection level management method including: setting, in a case where the number of remaining days until a delivery date of a printed matter by printing work for which an order is received is equal to or larger than a predetermined reference number of work days, an inspection level for the printed matter to a predetermined first inspection level; setting, in a case where the number of remaining days is smaller than the reference number of work days, the inspection level for the printed matter by reducing the inspection level from the first inspection level to a second inspection level in which a work period is shorter than a work period of the first inspection level; and outputting the set second inspection level.

According to the configuration of the first aspect of the present disclosure, a delay in a delivery date of the printed matter for which the order is received can be suppressed.

According to the configuration of the second aspect of the present disclosure, the accuracy of setting the reference number of work days is increased.

According to the configuration of the third aspect of the present disclosure, the accuracy of setting the reference number of work days is increased.

According to the configuration of the fourth aspect of the present disclosure, a delay suppressing effect is higher than in a case where the number of work days having a smaller value than the others is set as the reference number of work days.

According to the configuration of the fifth aspect of the present disclosure, the accuracy of setting the reduction degree is increased.

According to the configuration of the sixth aspect of the present disclosure, the accuracy of setting the reduction degree is increased.

According to the configuration of the seventh aspect of the present disclosure, an inspection quality is easily maintained as compared with a case where the inspection level is reduced by the reduction degree larger than the others.

According to the configuration of the eighth aspect of the present disclosure, the accuracy of setting the reduction degree is increased.

According to the configuration of the ninth aspect of the present disclosure, the accuracy of setting the reduction degree is increased.

According to the configuration of the tenth aspect of the present disclosure, the delay in the delivery date of the printed matter for which the order is received can be suppressed.

According to the configuration of the eleventh aspect of the present disclosure, the delay in the delivery date of the printed matter for which the order is received can be suppressed.

### BRIEF DESCRIPTION OF THE DRAWINGS

Exemplary embodiment(s) of the present invention will be described in detail based on the following figures, wherein:
Fig. 1 is a block diagram showing a configuration of an inspection level management system according to a first exemplary embodiment;
Fig. 2 is a block diagram showing an inspection level management device of the inspection level management system according to the first exemplary embodiment;
Fig. 3 is a flowchart showing an example of inspection level management processing executed in the inspection level management device according to the first exemplary embodiment;
Fig. 4 is an example of a condition setting screen in the inspection level management processing according to the first exemplary embodiment;
Fig. 5 is a flowchart showing an example of inspection level management processing executed in an inspection level management device according to a second exemplary embodiment;
Fig. 6 is an example of a condition setting screen in the inspection level management processing according to the second exemplary embodiment;
Fig. 7 is a flowchart showing an example of inspection level management processing executed in an inspection level management device according to a third exemplary embodiment;
Fig. 8 is an example of a condition setting screen in the inspection level management processing according to the third exemplary embodiment;
Fig. 9 is a flowchart showing an example of inspection level management processing executed in an inspection level management device according to a fourth exemplary embodiment; and
Fig. 10 is an example of a condition setting screen in the inspection level management processing according to the fourth exemplary embodiment.

### DETAILED DESCRIPTION OF THE INVENTION

Hereinafter, exemplary embodiments of the present disclosure will be described in detail with reference to the accompanying drawings.

### <<First Exemplary Embodiment>>

### <Inspection Level Management System>

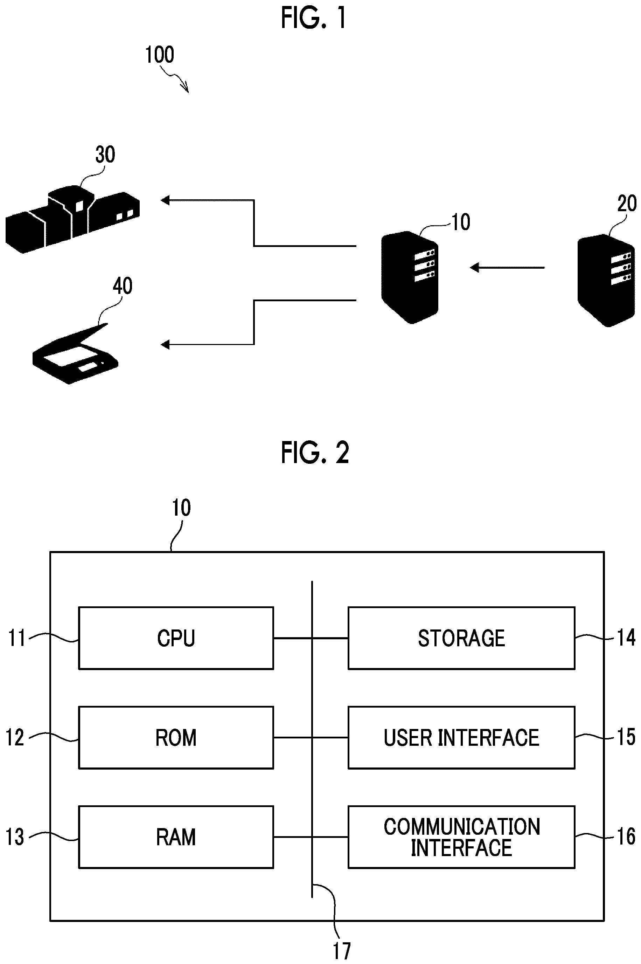

First, an example of an inspection level management system 100 according to the present exemplary embodiment will be described with reference to Figs. 1 and 2. As shown in Fig. 1, the inspection level management system 100 according to the present exemplary embodiment includes an inspection level management device 10, an order reception management device 20, a printing device 30, and an inspection device 40. Note that the term "system" in the present exemplary embodiment includes both a system configured with a plurality of devices and a system configured with a single device.

### (Order Reception Management Device)

The order reception management device 20 is connected to the inspection level management device 10. The order reception management device 20 transmits, to the inspection level management device 10, order reception contents including information such as a delivery date, a sample for printing, and a delivery destination of a printed matter for which an order is received from the outside. Note that a case where one inspection level management device 10 is connected to one order reception management device 20 is described in the present exemplary embodiment, but in the present disclosure, a plurality of inspection level management devices may be connected to one order reception management device. Further, in the present specification, the connection between the devices may be formed in a wireless state or may be formed in a wired state, unless otherwise specified.

The printed matter of the present exemplary embodiment includes, for example, one or more flat sheet-like printed matter such as a magazine or a leaflet. Note that, in the present disclosure, the printed matter is not limited to the flat printed matter, and the printed matter, which is a three-dimensional printed matter including a printed portion such as a shirt or a box, is not excluded.

### (Inspection Level Management Device)

The inspection level management device 10 transmits an instruction to perform printing work (that is, a job) of the printed matter for which the order is received, to the printing device 30 based on the order reception contents received from the order reception management device 20. Further, an instruction to inspect the printed matter printed by the printing device 30 is transmitted to the inspection device 40. The inspection level management device 10 of the present exemplary embodiment reduces an inspection level of the inspection performed by the inspection device 40 according to the number of remaining days until the delivery date of the job for which the order is received.

### (Printing Device)

The printing device 30 is connected to the inspection level management device 10. The printing device 30 prints the printed matter based on the instruction for the job received from the inspection level management device 10. The printed matter is printed by a customer who places the order or based on the sample for printing presented by the order reception management device 20. The printed matter that is printed is transmitted to the inspection device 40. Note that a case where one printing device 30 is connected to one inspection level management device 10 is described in the present exemplary embodiment, but in the present disclosure, a plurality of printing devices may be connected to one inspection level management device.

### (Inspection Device)

The inspection device 40 is connected to the inspection level management device 10. The inspection device 40 inspects the printed matter transmitted from the printing device 30. The inspection is work for checking the identity with the sample for printing, that is, the reproducibility. As the inspection level, a plurality of inspection levels can be set according to an area of an inspection target portion of the printed matter, the number of inspection target portions in one printed matter, the work time required for one inspection target portion, and the like.

Note that, in the present exemplary embodiment, a length of "day" is adopted as the unit for measuring the work time, such as a reference number of work days and the number of remaining days, but the present disclosure is not limited to this. Other lengths such as "hour", "minute", and "second" may be adopted as the unit for measuring the work time. For example, in a case where "time" is adopted, the expression such as a reference work time and a remaining time is possible. Further, in the present disclosure, each of "day", "hour", "minute", "second", and the like may be comprehensively expressed as the reference work time and the remaining time.

As shown in Fig. 2, the inspection level management device 10 that is an example of the inspection level management device includes a central processing unit (CPU; processor) 11, a read only memory (ROM) 12, a random access memory (RAM) 13, a storage 14, a user interface 15, and a communication interface 16. The configurations are communicably connected to each other via a bus 17.

The CPU 11 is a central arithmetic processing unit, and executes various programs or controls each of the units. That is, the CPU 11 reads out a program from the ROM 12 or the storage 14 to execute the program using the RAM 13 as a work area. The CPU 11 controls each of the configurations described above and performs various types of arithmetic processing according to the program recorded in the ROM 12 or the storage 14. The CPU 11 is a processor of the present disclosure. The inspection level management device includes at least one processor.

In the present exemplary embodiment, an inspection level management program is stored in the ROM 12 or the storage 14. The inspection level management program is an arithmetic program for managing a power supply of an electronic device.

The ROM 12 stores various programs and various data. The RAM 13 temporarily stores the program or the data, as the work area. The storage 14 is configured with a hard disk drive (HDD) or a solid state drive (SSD), and stores various programs including an operating system and various data.

The user interface 15 is an interface for a user to use the inspection level management device 10. The user interface 15 can include, for example, at least one of a liquid crystal display including a touch panel that enables a touch operation by the user, a voice input reception unit that receives voice input by the user, or a button that can be pressed by the user. A display unit of the present exemplary embodiment is an example of the user interface 15. Note that the user interface 15 is not always required.

The communication interface 16 is an interface for the inspection level management device 10 to communicate with other devices, and for example, a standard such as Ethernet (registered trademark), FDDI, or Wi-Fi (registered trademark) is used.

In a case of executing the inspection level management program, the inspection level management device 10 realizes various functions by using the hardware resources described above. As a functional configuration realized by the inspection level management device 10, the inspection level management device 10 includes a condition setting unit, a job order reception unit, a number-of-remaining-days calculation unit, a number-of-days determination unit, and an inspection level assignment unit. Each functional configuration is realized by the CPU 11 reading out and executing the inspection level management program stored in the ROM 12 or the storage 14.

### <Inspection Level Management Processing>

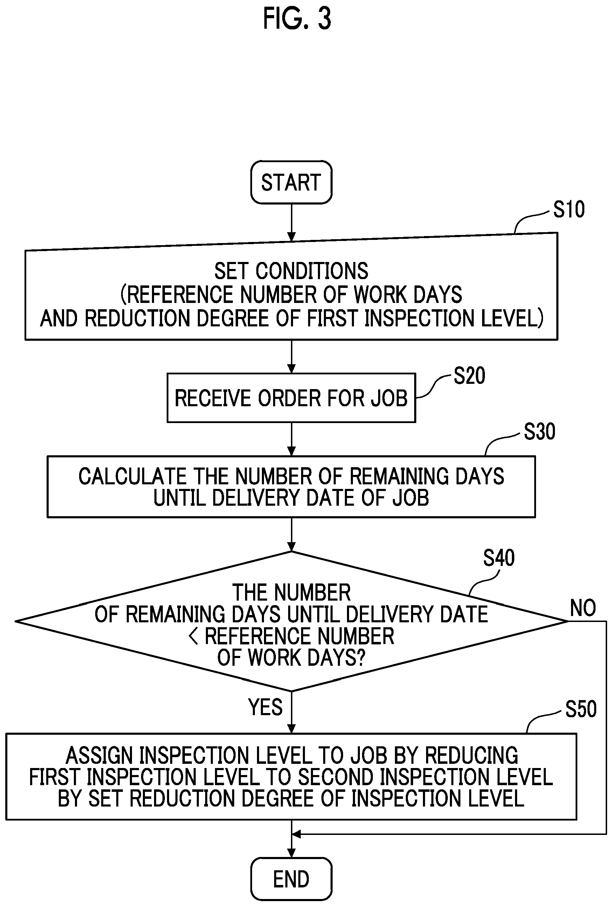

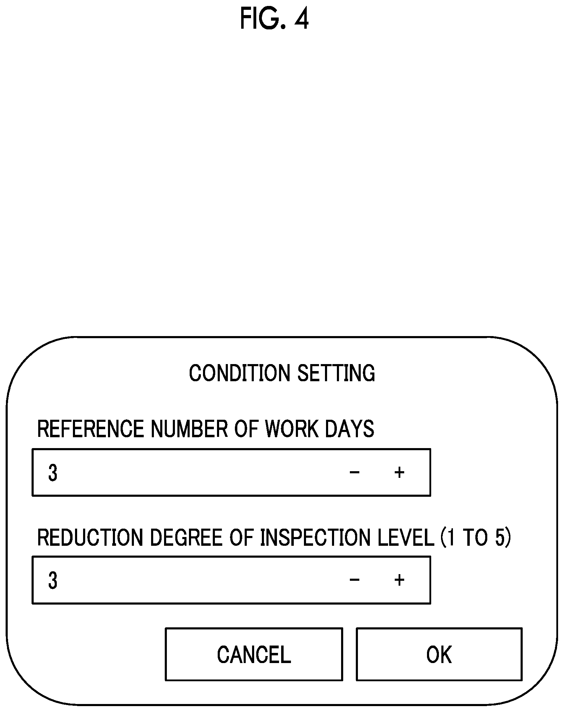

Next, an example of inspection level management processing executed in the inspection level management system according to the present exemplary embodiment will be described with reference to Figs. 3 and 4.

First, as shown in step S10 in Fig. 3, the condition setting unit of the inspection level management device 10 sets, as the conditions, the reference number of work days and a reduction degree of a first inspection level. The first inspection level is set in advance according to, for example, an empirical rule. Fig. 4 shows a condition setting screen on an interface for performing condition setting processing of the present exemplary embodiment. The set reference number of work days and reduction degree of the first inspection level are stored in the inspection level management device 10.

Next, the job order reception unit receives the order for the job as shown in step S20 in Fig. 3. Next, as shown in step S30 in Fig. 3, the number-of-remaining-days calculation unit calculates the number of remaining work days until the delivery date of the job. Specifically, for example, a value of the date on the day on which the inspection level management processing is performed need only be subtracted from a value of the delivery date.

Note that the day at the time when the inspection level management processing is performed is not included in the number of remaining days. The printing work is started after the inspection level management processing. Therefore, the day following the day at the time when the inspection level management processing is performed is a starting date of the number of remaining days, that is, a first day of the printing work. For example, even in a case where the inspection level management processing is performed in the morning of the first day in the reference number of work days of 6 days and the printing work can be started in the afternoon of the day on which the inspection level management processing is performed, the number of remaining days is defined as 5 days.

Next, as shown in step S40 in Fig. 3, the number-of-days determination unit determines whether or not the number of remaining days until the delivery date is smaller than the reference number of work days. In a case where the number of remaining days until the delivery date of the printed matter by the job for which the order is received is smaller than the reference number of work days, a YES determination is made, and the processing transitions to step S50.

Then, in step S50, the inspection level assignment unit sets the inspection level for the printed matter by reducing the inspection level from the first inspection level to a second inspection level in which a work period is shorter than a work period of the first inspection level. Further, the inspection level assignment unit assigns the second inspection level to the job. Thereafter, the inspection level management device 10 outputs the set second inspection level to the outside by using, for example, the user interface 15 in Fig. 2.

On the other hand, in step S40, in a case where the number of remaining days is equal to or larger than the predetermined reference number of work days, a NO determination is made, and the processing ends. Although not shown, the inspection level assignment unit sets the inspection level for the printed matter to the predetermined first inspection level. Further, the inspection level assignment unit assigns the first inspection level to the job. Thereafter, the inspection level management device 10 outputs the set first inspection level to the outside.

### (Action of First Exemplary Embodiment)

In the first exemplary embodiment, in a case where the number of remaining days until the delivery date of the printed matter by the job for which the order is received is smaller than the reference number of work days, the inspection level management system 100 sets the inspection level for the printed matter by reducing the inspection level from the first inspection level to the second inspection level in which the work period is shorter than the work period of the first inspection level. Therefore, a delay in a delivery date of the printed matter for which the order is received can be suppressed.

### <<Second Exemplary Embodiment>>

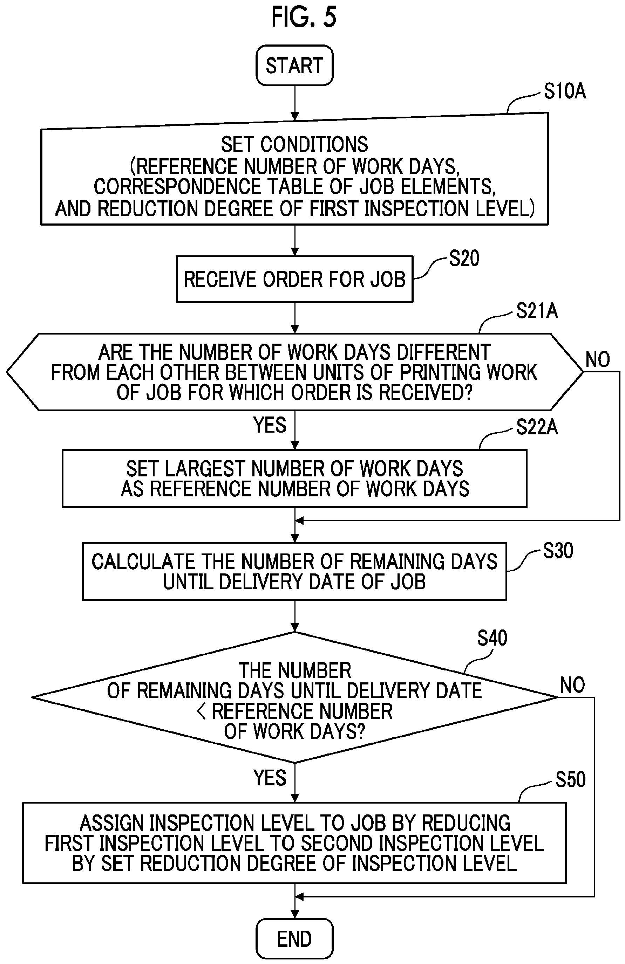

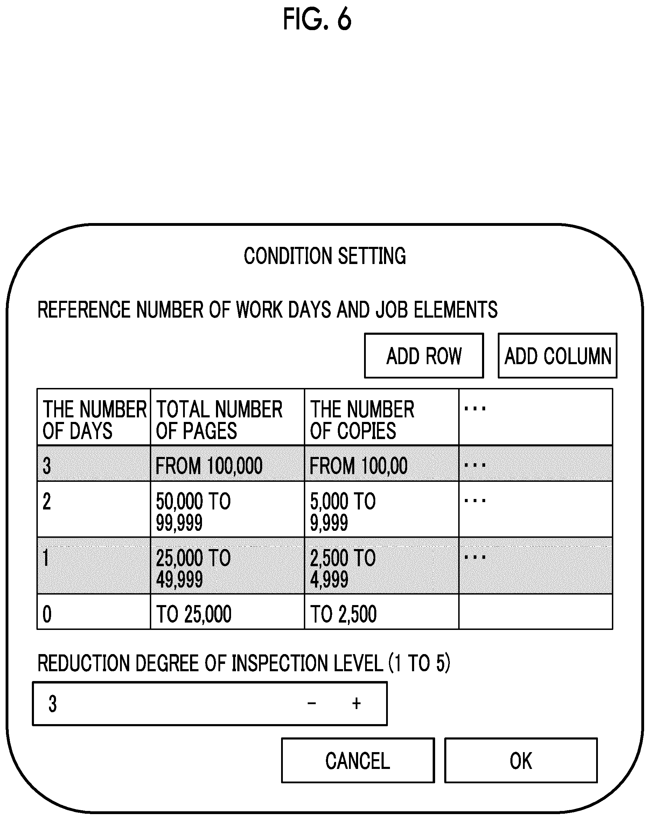

Next, a configuration of an inspection level management system according to a second exemplary embodiment will be described with reference to Figs. 5 and 6. Note that the identical reference numerals are given to the parts configured identically to the first exemplary embodiment, and the description thereof will be omitted as appropriate.

### <Inspection Level Management System>

In the second exemplary embodiment, as a functional configuration realized by the inspection level management device of the inspection level management system, the inspection level management device further includes an inter-unit number-of-work-days comparison unit and a reference-number-of-work-days adjustment unit. The other configurations in the second exemplary embodiment are common to the corresponding configurations in the first exemplary embodiment, and thus the duplicate description will be omitted.

### <Inspection Level Management Processing>

The inspection level management system according to the second exemplary embodiment is different from the inspection level management system according to the first exemplary embodiment in that the inspection level management processing further adjusts the reference number of work days according to a processing amount determined from the job for which the order is received.

Specifically, the processing amount determined from the job includes a printing man-hour, a post-processing man-hour, and the like. The printing man-hour means the man-hour related to the printing work of the job, such as the total number of pages and the number of copies. The total number of pages and the number of copies are a plurality of units representing the printing man-hour. The post-processing man-hour includes the man-hour for various types of work that occurs after an inspection work and is performed for shipping. The post-processing man-hour includes, for example, work such as cutting by imposition and packing. The cutting by imposition and the packing are a plurality of units representing the post-processing man-hour. Note that, in the present disclosure, the man-hour of the inspection work before the cutting may be included in the processing amount determined from the job. An inspection quality can be further improved by including the man-hour of the inspection work before the cutting in the processing amount determined from the job.

In the second exemplary embodiment, the processing amount includes at least one of the printing man-hour according to the number of printed matters to be delivered or the post-processing man-hour until the printed matter is completed after the inspection. Note that, in the present disclosure, the processing amount is not limited to the printing man-hour and the post-processing man-hour, and other elements may be adopted.

As shown in step S10A in Fig. 5, the condition setting unit further sets a correspondence table of the job elements in addition to the reference number of work days and the reduction degree of the first inspection level. In the correspondence table, the number of work days is associated with each of the plurality of units representing the printing man-hour of the job. A condition setting screen in Fig. 6 shows a state in which the total number of pages and the number of copies, each of which is the job element, are associated with the corresponding number of days as the plurality of units representing the printing man-hour. As the processing amount is larger, a larger number of work days is associated with each of the units of the total number of pages and the number of copies.

Then, as shown in step S21A in Fig. 5, the inter-unit number-of-work-days comparison unit compares the number of work days corresponding to the processing amount between the units of the job for which the order is received, by using the correspondence table. In a case where the number of work days corresponding to the processing amount is different between the units of the job for which the order is received, a YES determination is made, and the processing transitions to step S22A.

Then, in step S22A, the reference-number-of-work-days adjustment unit sets the largest number of work days as the reference number of work days. Note that, in the present disclosure, the method of setting the largest number of work days as the reference number of work days is not always required. For example, in further consideration of the number of remaining days, adoption of another number of work days such as the second largest work day from the top is not hindered.

On the other hand, in step S21A, in a case where the number of work days corresponding to the processing amount is the identical between the units of the job for which the order is received, a NO determination is made, and the processing transitions to step S30. Since the processing in and after step S30 is the same as a case of the first exemplary embodiment described with reference to Fig. 3, the description thereof will be omitted.

### (Action of Second Exemplary Embodiment)

Also in the second exemplary embodiment, as in the first exemplary embodiment, a delay in a delivery date of the printed matter for which the order is received can be suppressed.

Further, in the second exemplary embodiment, the inspection level management system 100 adjusts the reference number of work days according to the processing amount determined from the job for which the order is received. Therefore, the accuracy of setting the reference number of work days is increased.

In addition, in the second exemplary embodiment, the processing amount includes at least one of the printing man-hour according to the number of printed matters to be delivered or the post-processing man-hour until the printed matter is completed after the inspection. Therefore, the accuracy of setting the reference number of work days is increased.

Further, in the second exemplary embodiment, each of the printing man-hour and the post-processing man-hour is represented by the plurality of units. In addition, as the processing amount is larger, a larger number of work days is associated with each of the units of the total number of pages and the number of copies. In a case where the number of work days corresponding to the processing amount is different between the units of the job for which the order is received, the inspection level management system 100 sets the largest number of work days as the reference number of work days. Therefore, a delay suppressing effect is higher than in a case where the number of work days having a smaller value than the others is set as the reference number of work days.

### <<Third Exemplary Embodiment>>

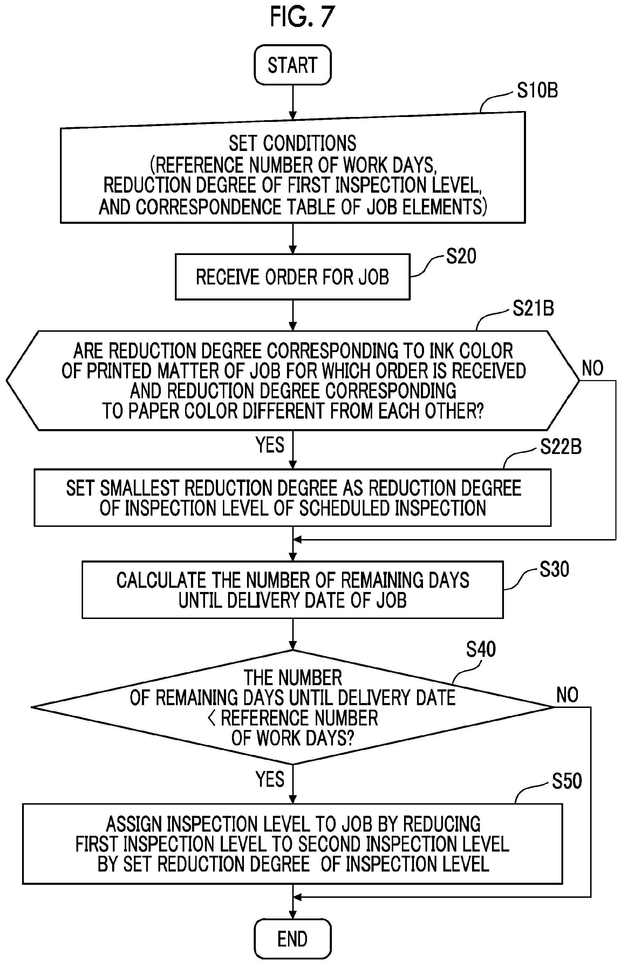

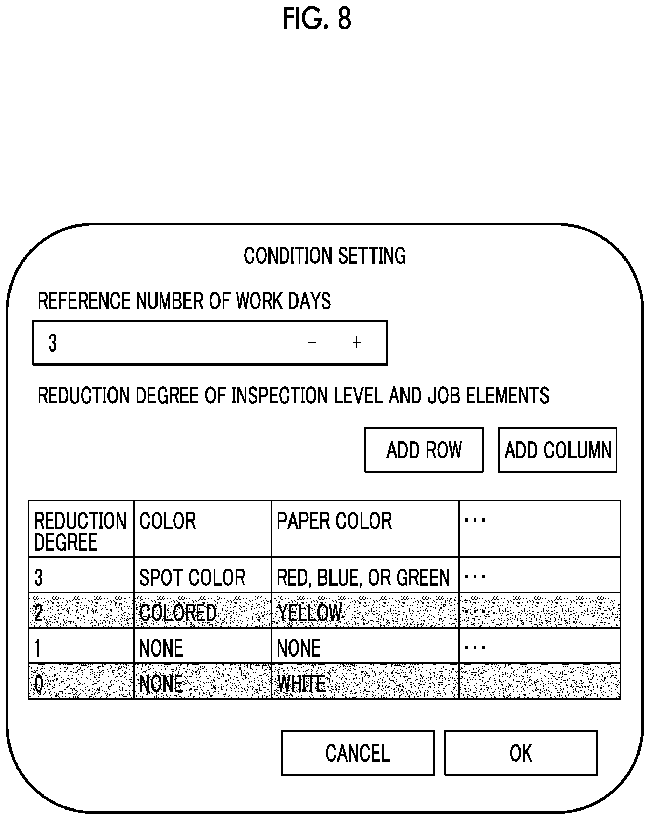

Next, a configuration of an inspection level management system according to a third exemplary embodiment will be described with reference to Figs. 7 and 8. Note that the identical reference numerals are given to the parts configured identically to the first exemplary embodiment, and the description thereof will be omitted as appropriate.

### <Inspection Level Management System>

In the third exemplary embodiment, as a functional configuration realized by the inspection level management device of the inspection level management system, the inspection level management device further includes a reduction degree comparison unit and a reduction degree adjustment unit. The other configurations in the third exemplary embodiment are common to the corresponding configurations in the first exemplary embodiment, and thus the duplicate description will be omitted.

### <Inspection Level Management Processing>

The inspection level management system according to the third exemplary embodiment is different from the inspection level management system according to the first exemplary embodiment in that, in the inspection level management processing, the reduction degree of the inspection level is adjusted according to a characteristic of the printed matter for which the order is received.

In the third exemplary embodiment, the characteristic includes at least one of an ink color used for drawing the printed matter or a paper color that is a color of paper of the printed matter. Note that, in the present disclosure, the characteristic of the printed matter is not limited to the ink color and the paper color, and other elements may be adopted. Further, in addition to a type of the color, an amount of the color may be included as the characteristic.

As shown in step S10B in Fig. 7, the condition setting unit further sets a correspondence table of the job elements in addition to the reference number of work days and the reduction degree of the first inspection level. In the correspondence table, the reduction degree of the inspection level is associated with each of a plurality of colors that can be the ink color and each of a plurality of colors that can be the paper color. As the characteristic, a condition setting screen in Fig. 8 shows a state in which the ink color and the paper color, which are both job elements, are associated with the corresponding reduction degree.

Note that, in the uppermost column of the correspondence table in Fig. 8, "spot color" as the ink color means a color including at least one of a color other than the four primary colors (cyan, magenta, yellow, and black) of printing, gold, silver, or a fluorescent color. In a case where the spot color is included in the sample for printing, reproducing the spot color on the printed matter is more difficult than reproducing a color other than the spot color.

In addition, in the second column from the top of the correspondence table in Fig. 8, "color" as the color of the ink color means that a color other than a monochrome color with white or black is included. In addition, in the uppermost column of the correspondence table in Fig. 8, "red, blue, or green" as the color of the paper color means that the color includes at least one of red, blue, or green. As the inspection work time of the color is longer, a larger reduction degree is associated with each of the ink color and the paper color.

Then, as shown in step S21B in Fig. 7, the reduction degree comparison unit compares the reduction degree corresponding to the ink color of the printed matter of the job for which the order is received, and the reduction degree corresponding to the paper color by using the correspondence table. In a case where the reduction degree corresponding to the ink color of the printed matter of the job for which the order is received is different from the reduction degree corresponding to the paper color, a YES determination is made, and the processing transitions to step S22B.

Then, in step S22B, the reduction degree adjustment unit sets the smallest reduction degree as the reduction degree of the inspection level of a scheduled inspection. Note that, in the present disclosure, the method of reducing the inspection level by the smallest reduction degree is not always required. For example, in further consideration of the number of remaining days, adoption of another reduction degree such as the second smallest reduction degree from the bottom is not hindered.

On the other hand, in step S21B, in a case where the reduction degree corresponding to the ink color of the printed matter of the job for which the order is received is identical to the reduction degree corresponding to the paper color, a NO determination is made, and the processing transitions to step S30. Since the processing in and after step S30 is the same as a case of the first exemplary embodiment described with reference to Fig. 3, the description thereof will be omitted.

### (Action of Third Exemplary Embodiment)

Also in the third exemplary embodiment, as in the first exemplary embodiment, a delay in a delivery date of the printed matter for which the order is received can be suppressed.

Further, in the third exemplary embodiment, the inspection level management system 100 adjusts the reduction degree of the inspection level according to the characteristic of the printed matter for which the order is received. Therefore, the accuracy of setting the reduction degree is increased.

In addition, in the third exemplary embodiment, the characteristic includes at least one of the ink color used for drawing the printed matter or the paper color that is the color of the paper of the printed matter. Therefore, the accuracy of setting the reduction degree is increased.

Further, in the third exemplary embodiment, the reduction degree of the inspection level is associated with each of the plurality of colors that can be the ink color and each of the plurality of colors that can be the paper color. In a case where the reduction degree corresponding to the ink color of the printed matter and the reduction degree corresponding to the paper color are different from each other, the inspection level management system 100 reduces the inspection level by the smallest reduction degree. Therefore, the inspection quality is easily maintained as compared with a case where the inspection level is reduced by the reduction degree larger than the others.

### <<Fourth Exemplary Embodiment>>

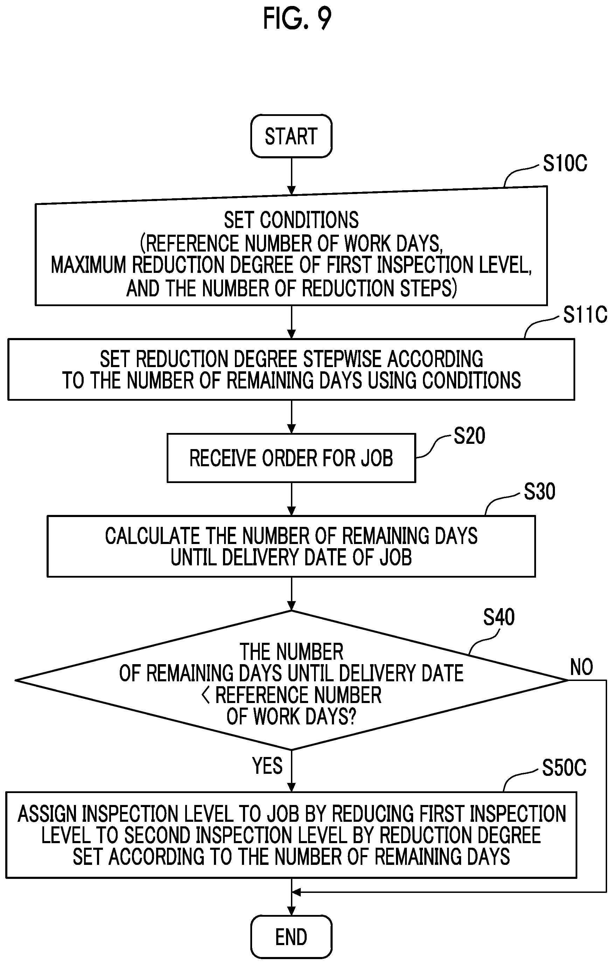

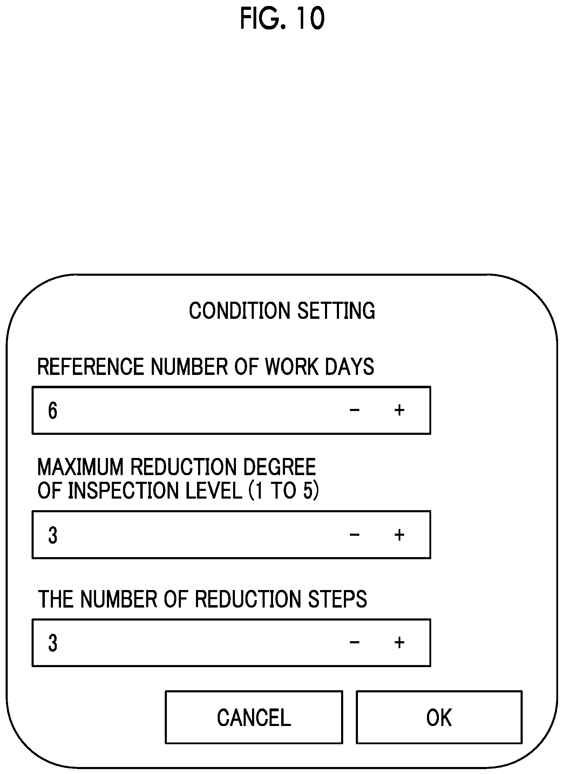

Next, a configuration of an inspection level management system according to a fourth exemplary embodiment will be described with reference to Figs. 9 and 10. Note that the identical reference numerals are given to the parts configured identically to the first exemplary embodiment, and the description thereof will be omitted as appropriate.

### <Inspection Level Management System>

In the fourth exemplary embodiment, a functional configuration realized by the inspection level management device of the inspection level management system is common to the corresponding configuration in the first exemplary embodiment, and thus the duplicate description will be omitted.

### <Inspection Level Management Processing>

The inspection level management system according to the fourth exemplary embodiment is different from the inspection level management system according to the first exemplary embodiment in that, in the inspection level management processing, the reduction degree is further adjusted stepwise according to the number of remaining days such that the reduction degree of the inspection level is larger as the number of remaining days is smaller.

As shown in step S10C in Fig. 9, the condition setting unit sets in advance the reference number of work days, the maximum reduction degree of the first inspection level, and the number of reduction steps. The reduction degree of the first inspection level is set, but in the fourth exemplary embodiment in the first exemplary embodiment, the maximum reduction degree of the first inspection level is set. The number of reduction steps is a numerical value that divides the reference number of work days. In a condition setting screen in Fig. 10, in a case where the reference number of work days is 6 days, a numerical value of 3 set as the maximum reduction degree and a numerical value of 3 set as the number of reduction steps are shown.

Then, as shown in step S11C in Fig. 9, the condition setting unit calculates a stepwise range of the number of days by dividing the reference number of work days by the number of reduction steps. In addition, the unit reduction degree is calculated by dividing the maximum reduction degree by the number of reduction steps.

For example, in a case of the condition setting screen shown in Fig. 10, 2 is calculated as the stepwise range of the number of days by dividing 6 of the reference number of work days by 3 of the number of reduction steps. Further, 1 is calculated as the unit reduction degree by dividing 3 of the maximum reduction degree by 3 of the number of reduction steps. Therefore, the reference number of work days of 6 days is divided into 3 parts of 2 days each. Further, in a case where the inspection level management processing is performed at the first step of the first day and the second day in the reference number of work days of 6 days, a value applied as the reduction degree of the inspection level is 1 of the unit reduction degree.

In addition, in a case where the inspection level management processing is performed at the central step of the third day and the fourth day in the reference number of work days of 6 days, a value applied as the reduction degree of the inspection level is 2 obtained by adding 1 of the unit reduction degree to 1 of the reduction degree of the first step. In addition, in a case where the inspection level management processing is performed at the last step of the fifth day and the sixth day in the reference number of work days of 6 days, a value applied as the reduction degree of the inspection level is 3 obtained by adding 1 of the unit reduction degree to 2 of the reduction degree of the central step.

Since the processing of steps S20 to S40 is the same as a case of the first exemplary embodiment described with reference to Fig. 3, the description thereof will be omitted. Then, as shown in step S50C in Fig. 9, the inspection level assignment unit assigns the inspection level to the job by reducing the first inspection level to the second inspection level by the reduction degree set according to the number of remaining days. Specifically, in a case where the number of remaining days corresponds to the first step among a plurality of steps, the inspection level assignment unit reduces the first inspection level by the unit reduction degree.

Further, in a case where the number of remaining days corresponds to the center of the first step and the last step among the plurality of steps, the inspection level assignment unit reduces the first inspection level such that the reduction degree of the inspection level is increased one by one by the unit reduction degree as the step transitions by one from a side of the first step toward a side of the last step. Further, in a case where the number of remaining days corresponds to the last step among the plurality of steps, the inspection level assignment unit reduces the first inspection level to the second inspection level by the maximum reduction degree.

For example, in the condition setting screen shown in Fig. 10, in a case where the number of remaining days is 5 days or 6 days at the time when the inspection level management processing is performed, the first inspection level is reduced by 1 of the reduction degree in the first step. In addition, in a case where the number of remaining days decreases to 3 days or 4 days with the passage of time, the first inspection level is reduced by 2 of the reduction degree in the central step. In addition, in a case where the number of remaining days decreases by 1 day or 2 days, the first inspection level is reduced by 3 of the reduction degree in the central step.

Note that the method of adjusting the reduction degree stepwise according to the number of remaining days such that the reduction degree of the inspection level is larger as the number of remaining days is smaller is not limited to the method of the present exemplary embodiment. In the present disclosure, for example, other methods may be adopted, such as setting the steps by different ranges of the number of days.

### (Action of Fourth Exemplary Embodiment)

Also in the fourth exemplary embodiment, as in the first exemplary embodiment, a delay in a delivery date of the printed matter for which the order is received can be suppressed.

Further, in the fourth exemplary embodiment, the inspection level management system 100 adjusts the reduction degree stepwise according to the number of remaining days such that the reduction degree of the inspection level is larger as the number of remaining days is smaller. Therefore, the accuracy of setting the reduction degree is increased.

Further, in the fourth exemplary embodiment, the inspection level management system 100 calculates the stepwise range of the number of days by dividing the reference number of work days by the number of reduction steps, and calculates the unit reduction degree by dividing the maximum reduction degree by the number of reduction steps. Further, in a case where the number of remaining days corresponds to the first step among the plurality of steps, the inspection level management system 100 reduces the first inspection level by the unit reduction degree. Further, in a case where the number of remaining days corresponds to the center of the first step and the last step among the plurality of steps, the inspection level management system 100 reduces the first inspection level such that the reduction degree of the inspection level is increased one by one by the unit reduction degree as the step transitions by one from a side of the first step toward a side of the last step. Further, in a case where the number of remaining days corresponds to the last step among the plurality of steps, the inspection level management system 100 reduces the first inspection level by the maximum reduction degree. Therefore, the accuracy of setting the reduction degree is increased.

### <Other Exemplary Embodiments>

The present disclosure is not limited to the exemplary embodiments described above, and various modifications, changes, and improvements can be made within a range without deviating from the gist of the present disclosure. For example, the exemplary embodiments described above and the modifications may be appropriately combined and configured.

Further, for example, in the present disclosure, various processors other than the CPU may execute the inspection level management processing executed by the CPU 11 reading the software (program) in the exemplary embodiments described above.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

Further, in each of the exemplary embodiments described above, the aspect in which the inspection level management program is stored (installed) in advance in the ROM 12 or the storage 14 is described, but the present disclosure is not limited to this. The program may be provided in a form of being recorded on a recording medium such as a compact disk read only memory (CD-ROM), a digital versatile disk read only memory (DVD-ROM), and a universal serial bus (USB) memory. Also, the program may be downloaded from an external device via a network.

The present disclosure includes various exemplary embodiments and the like that are not described above, and the technical scope of the present disclosure is defined only by the matters specifying the invention within the scope of claims appropriate from the above description.

### <Supplementary Note>

(((1))) An inspection level management system comprising:
   a processor configured to:
   in a case where the number of remaining days until a delivery date of a printed matter by printing work for which an order is received is equal to or larger than a predetermined reference number of work days, set an inspection level for the printed matter to a predetermined first inspection level;
   in a case where the number of remaining days is smaller than the reference number of work days, set the inspection level for the printed matter by reducing the inspection level from the first inspection level to a second inspection level in which a work period is shorter than a work period of the first inspection level; and
   output the set second inspection level.
(((2))) The inspection level management system according to (((1))), wherein the processor is configured to:
   adjust the reference number of work days according to a processing amount determined from the printing work for which the order is received.
(((3))) The inspection level management system according to (((2))),
   wherein the processing amount includes at least one of a printing man-hour according to the number of printed matters to be delivered or a post-processing man-hour until the printed matter is completed after inspection.
(((4))) The inspection level management system according to (((3))),
   wherein each of the printing man-hour and the post-processing man-hour is represented by a plurality of units,
   a larger number of work days is associated with each of the units as the processing amount is larger, and
   the processor is configured to:
      in a case where the number of work days corresponding to the processing amount is different between the units of the printing work for which the order is received, set a largest number of work days as the reference number of work days.
(((5))) The inspection level management system according to (((1))), wherein the processor is configured to:
   adjust a reduction degree of the inspection level according to a characteristic of the printed matter for which the order is received.
(((6))) The inspection level management system according to (((5))),
   wherein the characteristic includes at least one of an ink color used for drawing the printed matter or a paper color that is a color of paper of the printed matter.
(((7))) The inspection level management system according to (((6))),
   wherein the reduction degree of the inspection level is associated with each of a plurality of colors that are usable as the ink color and each of a plurality of colors that are usable as the paper color, and
   the processor is configured to:
      in a case where the reduction degree corresponding to the ink color of the printed matter and the reduction degree corresponding to the paper color are different from each other, reduce the inspection level by a smallest reduction degree.
(((8))) The inspection level management system according to (((1))), wherein the processor is configured to:
   adjust a reduction degree of the inspection level stepwise according to the number of remaining days such that the reduction degree is larger as the number of remaining days is smaller.
(((9))) The inspection level management system according to (((8))), wherein the processor is configured to:
   calculate a stepwise range of the number of days by dividing the reference number of work days by the number of reduction steps;
   calculate a unit reduction degree by dividing a preset maximum reduction degree by the number of reduction steps;
   in a case where the number of remaining days corresponds to a first step among a plurality of steps, reduce the first inspection level by the unit reduction degree;
   in a case where the number of remaining days corresponds to a center between the first step and a last step among the plurality of steps, reduce the first inspection level such that the reduction degree of the inspection level is increased one by one by the unit reduction degree as the step transitions by one from a side of the first step toward a side of the last step; and
   in a case where the number of remaining days corresponds to the last step among the plurality of steps, reduce the first inspection level by the maximum reduction degree.
(((10))) An inspection level management program causing a processor of an inspection level management system to execute a process comprising:
   processing of setting an inspection level for the printed matter to a predetermined first inspection level, in a case where the number of remaining days until a delivery date of a printed matter by printing work for which an order is received is equal to or larger than a predetermined reference number of work days;
   processing of setting the inspection level for the printed matter by reducing the inspection level from the first inspection level to a second inspection level in which a work period is shorter than a work period of the first inspection level, in a case where the number of remaining days is smaller than the reference number of work days; and
   processing of outputting the set second inspection level.

According to the configuration of (((1))), a delay in a delivery date of the printed matter for which the order is received can be suppressed.

According to the configuration of (((2))), the accuracy of setting the reference number of work days is increased.

According to the configuration of (((3))), the accuracy of setting the reference number of work days is increased.

According to the configuration of (((4))), a delay suppressing effect is higher than in a case where the number of work days having a smaller value than the others is set as the reference number of work days.

According to the configuration of (((5))), the accuracy of setting the reduction degree is increased.

According to the configuration of (((6))), the accuracy of setting the reduction degree is increased.

According to the configuration of (((7))), an inspection quality is easily maintained as compared with a case where the inspection level is reduced by the reduction degree larger than the others.

According to the configuration of (((8))), the accuracy of setting the reduction degree is increased.

According to the configuration of (((9))), the accuracy of setting the reduction degree is increased.

According to the configuration of (((10))), the delay in the delivery date of the printed matter for which the order is received can be suppressed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: inspection level management device
14: storage
15: user interface
16: communication interface
17: bus
20: order reception management device
30: printing device
40: inspection device
100: inspection level management system

## Claims

1. An inspection level management system comprising:
a processor configured to:
in a case where the number of remaining days until a delivery date of a printed matter by printing work for which an order is received is equal to or larger than a predetermined reference number of work days, set an inspection level for the printed matter to a predetermined first inspection level;
in a case where the number of remaining days is smaller than the reference number of work days, set the inspection level for the printed matter by reducing the inspection level from the first inspection level to a second inspection level in which a work period is shorter than a work period of the first inspection level; and
output the set second inspection level.

2. The inspection level management system according to claim 1, wherein the processor is configured to:
adjust the reference number of work days according to a processing amount determined from the printing work for which the order is received.

3. The inspection level management system according to claim 2,
wherein the processing amount includes at least one of a printing man-hour according to the number of printed matters to be delivered or a post-processing man-hour until the printed matter is completed after inspection.

4. The inspection level management system according to claim 3,
wherein each of the printing man-hour and the post-processing man-hour is represented by a plurality of units,
a larger number of work days is associated with each of the units as the processing amount is larger, and
the processor is configured to:
in a case where the number of work days corresponding to the processing amount is different between the units of the printing work for which the order is received, set a largest number of work days as the reference number of work days.

5. The inspection level management system according to claim 1, wherein the processor is configured to:
adjust a reduction degree of the inspection level according to a characteristic of the printed matter for which the order is received.

6. The inspection level management system according to claim 5,
wherein the characteristic includes at least one of an ink color used for drawing the printed matter or a paper color that is a color of paper of the printed matter.

7. The inspection level management system according to claim 6,
wherein the reduction degree of the inspection level is associated with each of a plurality of colors that are usable as the ink color and each of a plurality of colors that are usable as the paper color, and
the processor is configured to:
in a case where the reduction degree corresponding to the ink color of the printed matter and the reduction degree corresponding to the paper color are different from each other, reduce the inspection level by a smallest reduction degree.

8. The inspection level management system according to claim 1, wherein the processor is configured to:
adjust a reduction degree of the inspection level stepwise according to the number of remaining days such that the reduction degree is larger as the number of remaining days is smaller.

9. The inspection level management system according to claim 8, wherein the processor is configured to:
calculate a stepwise range of the number of days by dividing the reference number of work days by the number of reduction steps;
calculate a unit reduction degree by dividing a preset maximum reduction degree by the number of reduction steps;
in a case where the number of remaining days corresponds to a first step among a plurality of steps, reduce the first inspection level by the unit reduction degree;
in a case where the number of remaining days corresponds to a center between the first step and a last step among the plurality of steps, reduce the first inspection level such that the reduction degree of the inspection level is increased one by one by the unit reduction degree as the step transitions by one from a side of the first step toward a side of the last step; and
in a case where the number of remaining days corresponds to the last step among the plurality of steps, reduce the first inspection level by the maximum reduction degree.

10. An inspection level management program causing a processor of an inspection level management system to execute a process comprising:
processing of setting an inspection level for the printed matter to a predetermined first inspection level, in a case where the number of remaining days until a delivery date of a printed matter by printing work for which an order is received is equal to or larger than a predetermined reference number of work days;
processing of setting the inspection level for the printed matter by reducing the inspection level from the first inspection level to a second inspection level in which a work period is shorter than a work period of the first inspection level, in a case where the number of remaining days is smaller than the reference number of work days; and
processing of outputting the set second inspection level.

11. An inspection level management method comprising:
setting, in a case where the number of remaining days until a delivery date of a printed matter by printing work for which an order is received is equal to or larger than a predetermined reference number of work days, an inspection level for the printed matter to a predetermined first inspection level;
setting, in a case where the number of remaining days is smaller than the reference number of work days, the inspection level for the printed matter by reducing the inspection level from the first inspection level to a second inspection level in which a work period is shorter than a work period of the first inspection level; and
outputting the set second inspection level.
